# EUROPEAN PATENT APPLICATION

(11) **EP 0 949 595 A2**
(43) Date of publication of application: **13.10.1999**
(21) Application number: 99200967.0
(22) Date of filing: 26.03.1999
(51) Int. Cl.: G07F 7/10

(54) **Method and system for managing applications for a multi-function smartcard**

(30) Priority: 30.03.1998 US 79803
(71) Applicant: Citicorp Development Center, Inc., Los Angeles, California 90066 (US)
(72) Inventor: Pan, Jack C., California 91748 (US); Guzman, Marc A., California 92586 (US); Boyd, Nik, Los Angeles, California 90066 (US); Smushkovich, Yosif, Santa Monica, California 90403 (US); Pinn, Fred, California 91406 (US)
(74) Representative: Hynell, Magnus

(57) **Abstract**

A method and system for managing applications for a multi-function smartcard makes use of a resident master application and one or more monitor applications installed on the smartcard microcomputer to authorize downloading of new applications to the smartcard and to manage applications on the smartcard. New applications are installed on the smartcard using a security mechanism of the monitor application. When a new application is installed, it is provided, for example, with an operation key, cardholder information, and a digital certificate. The new application is registered in a software registry of the smartcard according to an object-oriented classifications, a copy of the registry is stored in an electronic deposit box, and the electronic deposit box is updated with operational data for the new application. The new application selectively shares one or more objects with objects of other applications on the smartcard on a restricted or unrestricted basis.

## Description

### Cross-Reference to Related Applications

This application claims the benefit of U.S. Provisional Application No. 60/079,803 filed March 30, 1998.

### Field of the Invention

The present invention relates generally to smart cards, and more particularly to a method and system for managing applications for a chip-based smartcard which has processing capability and storage capacity for more than one smartcard function.

### Background

Single-function magnetic stripe cards, having a magnetic stripe on a plastic card, have been in use for many years. Such cards are based on magnetic stripe technology that can hold, for example, up to 40 characters of data on three tracks, including such information as the cardholder's name, account number, and expiration date. Existing credit, debit, and pay phone cards are magnetic stripe based.

Single-function chip cards having, for example, an 8-bit microprocessor chip, such as 8051 or 6805, embedded in the plastic card offer limited processing capability and memory storage capacity, such as 1 to 2K E²PROM. Such cards support a single function, such as stored value, and offer better security via tamper-resistant hardware and reduced on-line transaction and infrastructure costs over magnetic stripe cards. The contents of such cards are fixed at the time of issuance.

Multi-technology hybrid cards blend more than one card technology into a single card. Technologies that are applied to such cards include magnetic stripe, 2-D bar code, optical stripe, and chip. The rationale behind such a combination is to leverage the processing power of a chip with either the backward compatibility of the magnetic stripe or the storage capacity of the 2-D bar code or optical stripe. With regard to the chip-optical combination, a combination reader is capable of reading and writing both the chip and optical stripe portions of the card.

Other cards combine contact and contactless technologies. Contactless cards are the functional equivalent of contact cards but use radio frequency technology to interact with the card reader instead of being inserted into a device. A card with contactless technology transmits transaction data and records the data that it receives when passed within either one millimeter (close coupling), 8-10 centimeters (proximity), or 0.5-1 meter (vicinity) of the reader. With contactless cards, transaction times are reduced 20 to 30 times as compared to cards requiring insertion into a device. Such combination cards offer the convenience, performance, and reliability of a contactless card, along with the security and functionality of a contact card. These cards have gained popularity as facility access and mass transit applications, such as bus, train, subway, and ferry, and have emerged as viable smartcard applications, especially when they are combined with payment methods on a single card.

While static multi-function chip cards are capable of handling multiple functions that were masked into E²PROM at the time of card initialization, they are static because applications and functions are fixed once the card is issued.

The smartcard industry has been around since the 1970s. However, with the exception of Europe, most of the world has not gone much beyond trials and pilots. For example, financial institutions, such as banks, have introduced stored value cards, such as VISA CASH and MONDEX, to customers and merchants in pilot programs. In such pilot programs, stored value cards have been tested in densely populated areas to help reach a critical mass of acceptance in the marketplace of consumers and merchants and to establish interoperability at merchant point of sale (POS) terminals.

While the increasing rate of smartcard usage is encouraging, it is also evident that single-function smartcards, such as stored value or pay phone cards, are a hard sell in the United States. This is mainly due to the convenience of cash and the ubiquity of credit card usage. Hence, stored value applications, at best, can be considered applications that are necessary elements of any real world smartcard programs, but are not sufficient in themselves to create a critical mass of smartcard acceptance.

Since its inception in the 1970s, a first movement in the smartcard industry began at the genesis of the technology, when a chip-based plastic card was developed to replace its magnetic stripe counterpart. Such a card offered added security and reduction in costs associated with on-line transactions and their underlying infrastructure support. A second movement can begin in the smartcard industry with the advent of a dynamic, multi-function smartcard.

The United States had little active involvement in the first movement, because of the establishment in the telecommunications infrastructure and the ubiquity of credit card usage. However, the United States can be a leader in the second movement, because of reliance by the electronic commerce industry on the smartcard to offer much needed portability, security, encryption, and authentication. Development of technologies, such as a Java card platform can allow the smartcard industry to realize the advantage of "write once, run anywhere" in which an application needs to be written only once and can then run on any card from any manufacturer.

### Summary of the Invention

It is a feature and advantage of the present invention to provide a method and system for managing applications for a multi-function smartcard, which allows cardholders to carry less cash and affords cardholders nomadic access to financial and other services at any time or place and via any device.

It is a further feature and advantage of the present invention to provide a method and system for managing applications for a multi-function smartcard, which enables cardholders to organize personal information.

It is an additional feature and advantage of the present invention to provide a method and system for managing applications for a multi-function smartcard, which allows cardholders to carry fewer cards and to use the same card to conduct a suite of applications.

It is another feature and advantage of the present invention to provide a method and system for managing applications for a multi-function smartcard, which offers cardholders a means to back up their valuable information on the card.

It is a still further feature and advantage of the present invention to provide a method and system for managing applications for a multi-function smartcard, which affords cardholders the ability to store all types of information, such as emergency information or insurance information on the card.

It is still another feature and advantage of the present invention to provide a method and system for managing applications for multi-function smartcard, which can be customized by cardholders selecting applications based on personal needs and preferences.

To achieve the stated and other features, advantages and objects of the present invention, an embodiment of the invention provides a method and system for managing applications for a multi-function smartcard, such as adding new applications or applets to the smartcard for a cardholder, which includes, for example, installing a monitor application for the new application on the smartcard microcomputer, authorizing download of the new application by the monitor application and by a master application resident on the smartcard, and downloading the new application to the smartcard microcomputer. Key hardware components of the system include for example, the smartcard embedded with a microcomputer, a terminal, a network, and a server, such as a financial institution server. Important aspects of the card application platform are the master application and the monitor application. The master application serves as an arbiter, a gatekeeper, and a message dispatcher on the smartcard, and the monitor application is a special applet supplied by an applet provider, which controls the installation of the provider's applet or applets on the smartcard.

In an embodiment of the present invention, the monitor application is installed, for example, by downloading the monitor application from a server, such as an electronic customization depot, which includes functionalities of either or both of an applet server and a monitor application server. The monitor application is downloaded, for example, at a terminal, which is any one of a number of access devices, such as an automated teller machine, a merchant terminal, a personal computer, a personal digital assistant, a TV set-top box, a land phone, a cell phone, a digital phone, a cable TV box, a satellite TV box, a contact reader, a contactless reader, or a combination contact and contactless reader. The monitor application is downloaded, for example, at the terminal from the server over a network, which is either public or proprietary. In any event, initializing the monitor application with a key provided, for example, by a server, either during initialization of the smartcard or after the smartcard has been issued, is an aspect of authorizing download of the new application. Another aspect of authorizing download of the new application is registering an application identifier for the new applications with the monitor applicalion and subsequently with the master application for dispatching of messages.

In an embodiment of the present invention, a security aspect of downloading the new application to the smartcard is verifying the identification of the cardholder, for example, by an application on the smartcard microcomputer. Such identification is done, for example, by a PIN of the cardholder or with biometric data for the cardholder. The latter is performed, for example, by a scanner at the terminal, and the biometric data, such as the cardholder's finger print, is compared with a reference template on the smartcard. Another security aspect of downloading the new application is authenticating the smartcard, for example, by the server.

In an embodiment of the present invention, the cardholder is offered a selection of service options by the system, including the option to download a new application to the cardholder's smartcard. Upon selecting the option to download a new application, the cardholder is offered a list of qualified new applications, according to pre-defined parameters, from which to select. The pre-defined parameters include, for example, whether a particular new application is supported by business based on the relationship between the cardholder and the financial institution, and whether there is sufficient space on the smartcard microcomputer to accommodate a particular new application.

In an embodiment of the present invention, the cardholder makes a selection of a new card application from the list of qualified new applications, and the new application is downloaded to the smartcard from the Server, such as the electronic customization depot, which has either or both of applet server and monitor application functionalities. The new application is downloaded at the terminal, which is any one of the smartcard access devices, such as an automated teller machine, a merchant terminal, a personal computer, a personal digital assistant, a TV set-top box, a land phone, a cell phone, a digital phone, a cable TV box, a satellite TV box, a contact reader, a contactless reader, or a combination contact and contactless reader.

In an embodiment of the present invention, the new application is downloaded over the network, which is public or proprietary, and installed on the smartcard microcomputer. The new application is installed using a security mechanism of the monitor application, and the new application is supplied with an operation key. The new application is also supplied with cardholder information, as well as a new digital certificate. The new application is registered in a software registry of the smartcard microcomputer, according to an object-oriented classification of the software registry. A copy of the smartcard registry is furnished to an electronic deposit box of the financial institution, and the electronic deposit box is updated with a copy of operational data for the new application. At least one object of the new application is selectively shared with at least one object of another application on the smartcard, and the selective sharing is one or both of restricted and unrestricted sharing by the new application.

Additional objects, advantages and novel features of the invention will be set forth in part in the description which follows, and in part will become more apparent to those skilled in the art upon examination of the following or may be learned by practice of the invention.

### Brief Description of the Drawing

Fig. 1 is a schematic diagram which shows an overview of examples of the key components and the flow of information between the key components of the system for an embodiment of the present invention;
Fig. 2 is a chart which shows a sample of layered hierarchy in the smartcard platform for an embodiment of the present invention;
Fig. 3 is a schematic diagram which amplifies the flow of information shown in Fig. 1 and provides further detail regarding the process of selecting and securely downloading an applet onto the smartcard for an embodiment of the present invention; and
Fig. 4 is a flow chart which provides further detail regarding the process of selecting and securely downloading an applet onto the smartcard for an embodiment of the present invention.

### Detailed Description

As smartcard technology has evolved from the single function magnetic stripe card, the cost of each card technology is proportional to the capability it delivers. For example, a rough estimate of cost for various card technologies ranges about $0.15 per card for single function magnetic stripe cards, about $2.50 for a single function chip card, about $3 per card for multi-technology hybrid cards, about $4 for a static multi-function chip card, and about $7 per card for contact-contactless combination cards. A rough estimate of the cost of a multi-function chip card for an embodiment of the present invention is in the range of about $9. Moore's law, which projects that chip processing power doubles while the cost reduces in half every 12 to 18 months, indicates that as the demand for a multi-function card rises over time, the corresponding cost will decline steadily as time passes.

In an embodiment of the present invention, a cross-industry multi-function smartcard can handle more than one application and can support the installation of new applications after the card has been issued. Application functions of a multi-function smartcard include, for example, payment vehicles, such as credit, debit, and stored value. Other functions of a multi-function smartcard include, for example, access keys for facility and network access, information manager for managing an individual's profile, demographic, and preference information, cryptographic engine for conducting encryption and authentication, and marketing tool for loyalty programs and coupons.

In an embodiment of the present invention, given the possible combinations of application functions, a multi-function smartcard serves as a bridge between the physical world and the virtual world. For example, a cardholder can use the same card to conduct purchases over the Internet and at merchant POS terminals. A smartcard infrastructure platform, such as a Java card platform, supports a multi-function card environment which is open, secure, multi-functional, dynamically downloadable, chip platform independent, and broad programmers based.

In an embodiment of the present invention, it is noted that the term multi-function and multi-application smartcards have different meanings to different groups of people. The differences are articulated as differences between a function and an application. A function is a generic concept, while an application is the actual realization of the concept in particular implementation. For example, electronic purse or stored value is a function, while, for example, VISA CASH or MONDEX purse is an application. The correspondence between the two is many-to-many, in that many applications can be classified into a single function, as in the case of electronic purse, and many functions can be embodied in a single application. For example, Visa's VIS application consists of both credit and debit functions. Therefore, a multi-function smartcard is defined, for example, as a chip-based plastic card equipped with the necessary processing capability and storage capacity to handle more than one smartcard function, and thus more than one application, which are either installed at the time of issuance or loaded during runtime.

In an embodiment of the present invention, a broad platform strategy is applied from end-to-end, allowing simultaneous download and upgrade of software, from the card to the terminal and, ultimately, to the server. The system provides a flexible distributed architecture, whereby the intelligence or processing capability is distributed throughout the system. For example, depending on application needs and business requirements, migration of processing capabilities from a terminal, such as an electronic wallet, to the card or to the server is permitted. With such an end-to-end perspective, system-wide concerns such as security, performance, interoperability, and standardization are reflected and addressed.

In an embodiment of the present invention, industry-specific application templates or generic applications are created that can be derived or inherited to produce specialized applications. Templates facilitate reuse, enable customization, and promote interoperability. Standards and interoperability are tightly coupled, and standards enable interoperability. Toward that end, a reinvigoration of the EMV standard adds stored value to the existing debit and credit functions. Similarly, incorporation of smartcard capability in the Secure Electronic Transaction (SET) standard solidifies a chip-electronic commerce vision as the industry moves forward.

In an embodiment of the present invention, there are, for example, three areas of primary focus in the development of a card application platform. One such area is secure dynamic application download, which includes, for example, policies and mechanisms for securely installing card applications on a smartcard after the card has been issued. Another such area is on-card application interactions, which includes, for example, mechanisms for allowing card applications to discover and safely interact with each other. An additional such area is off-card application interactions, which includes, for example, mechanisms for supporting secure interactions between on-card and off-card applications and for supporting advanced system management.

In an embodiment of the present invention, a dynamic multi-function chip card has on-card infrastructure support to facilitate post-issuance download of new applications. It is dynamic because card applications can be added or deleted after the card is issued, and an embodiment of the present invention provides an end-to-end architecture to facilitate such an operation. Relationship cards, such as Bankcard and Citicard, have traditionally been the vehicle for extending services, for example, to customers of a financial institution, such as Citibank. A multi-function card provides a relationship card for the financial institution that integrates, for example, stored value (pay before), debit (pay now), credit (pay later), and Citicard (ATM access), with other cross-industry services as part of the financial institution's overall strategy to broaden and deepen the relationships with its customers. Further, by incorporating the credit functionality, such as Bankcard, as part of the relationship, the financial institution maintains its brand leadership while extending financial services relationship, for example, for Bankcards.

In an embodiment of the present invention, the multi-function smartcard affords nomadic access by the portability and mobility of multi-function smartcards. Such cards are an essential part, for example, of a new distribution model, in that the cards are used for access at a multiplicity of delivery vehicles, such as the Internet, GSM phone, cable, and WebTV, over all distibution channels. With such nomadicity, a multi-function smartcard enables a customer to conduct financial services anywhere, anytime, and via any device.

In an embodiment of the present invention, a multi-function smartcard supports and maximizes the global position of a financial institution, such as Citibank, in consumer and business electronic commerce, as the financial institution's core business lies in the transfer of value or movement of money and the extension of credit and related services. Lack of security and resulting proneness to fraud inherent in magnetic stripe cards costs financial institutions millions of dollars each year. The tamper resistant hardware and on-card infrastructure support of smartcards offers added security and cost savings for issuers and customers alike.

In an embodiment of the present invention, a primary benefit offered by a multi-function smartcard is convenience. Such cards provide great value to consumers, for example, by allowing consumers to carry less cash, by affording consumers nomadic access to financial and other services anywhere, anytime, and via any device, and by helping consumers to organize personal information. Another benefit which such cards offer consumers is consolidation. Consumers are attracted by the idea of combining everything in one place or in one card. Consolidation allows consumers to carry fewer cards in their wallets and to use the same card to conduct a suite of applications. Such a card is truly the ultimate thin client. As more and more information is consolidated on the card, an issue arises about the potential loss of the card. The financial institution offers a means for its customers to back up their valuable information on the card, which puts the financial institution in a unique market differentiating position and further strengthens its relationship with its customers.

In an embodiment of the present invention, a further benefit afforded customers by such a card is information storage. The concept of storing information on the card is a powerful proposition to consumers. This not only saves time, as in the case of filling forms, but can also be lifesaving, as in the case of storing important emergency information, such as allergies to medications or insurance information. A still further benefit afforded to customers by such a card is customization. With the dynamic downloadability of the multi-function card environment, consumers are able to customize the card by selecting applications based on personal needs and preferences. This puts the control of the card back to the consumer so that the card truly reflects the consumer's personality and lifestyle.

An embodiment of the present invention moves from a terminal-centric world to a customer centered, smartcard-centric world in which the smartcard is regarded as the ultimate thin client. The smartcard holds the cardholder's identity, such as biometrics, along with other payment and access vehicles that allow the cardholder to conduct transactions anywhere, anytime, and via any device. With such portability, the smartcard can truly enable nomadic access to the various services through both the physical and the virtual worlds.

In an embodiment of the present invention, interoperability means different things at different levels of an end-to-end architecture. In essence, it means that two or more applications or participants can use each piece of the infrastructure, such as the card itself, the terminals interacting with the cards, the electronic customization depot for card applications, the acquisition and card management systems, and the settlement systems. Interoperability is a foundation necessary for operating multi-function cards and is thus a very important feature of the multi-function smartcard in the electronic commerce industry. Interoperability is a vital feature at all levels and is in place, for example, in the card infrastructure, among card applications, at the terminal-to-card interaction, and within the network infrastructure.

In an embodiment of the present invention, at the card infrastructure level, the system has a standardized virtual machine interface and the supporting class libraries, such as provided by a Java card infrastructure. At the card application level, in order for applications from different service providers, that are either within an industry or across industries, to interact with one another, the system has a set of pre-defined interaction models at the terminal or network system, as well as in the card infrastructure, such as the Java card infrastructure. At the terminal level, terminals are powerful enough such that different cards with different applications can be read on more than one terminal type. For example, an airline loyalty terminal is able to read stored value cards to speed payment, and secure access applications work in electronic ticket, gate access environments. At the network infrastructure level, a network infrastructure supports multiple application messaging scheme and/or communication protocols, as well as application downloads.

In an embodiment of the present invention, a card platform, such as the Java card platform, serves as a standard for smartcard infrastructure. A card platform, such as the Java card platform, as the infrastructure for the smartcard is designed to achieve interoperability of applications both on the card and at the terminal. Specifically, a smartcard application designed for the Java card can run on or be added to any card supporting Java Virtual Machine (JVM) and Java class libraries. Similarly, interoperability at the terminal is achieved when the terminal has a low-level card agent or service provider that is capable of conversing with Java card applications on the other end. In such an environment, cards issued by different vendors seamlessly run on terminals from any vendors with varying capabilities.

In an embodiment of the present invention while financial services applications have been prototyped on the Java card 1.0 platform, for example, via Schllumberger's Cyberflex cards, cross-industry applications utilize the next generation smartcard platform, such as the Java card 2.0 specification. This platform serves to demonstrate the capability of such a multi-function card environment and to demonstrate how new applications can be added to the card post-issuance. Looking beyond the card infrastructure, an architectural innovation enables development of a coherent end-to-end application. A suite of platforms, such as Java platforms, is identified that are intended for different delivery devices and systems. In descending order of scope, such Java platforms encompass, for example, Java JDK, personal Java, embedded Java, Java wallet, Java card, and picoJava.

In an embodiment of the present invention. templates are the basic definition of applications which are essential in defining a generic application such as stored value, loyalty, or telecommunications. They are the basis on which can be built specific, branded versions of the application for a financial institution's customers. Templates are about function rather than branded identity. In a more technical sense, templates offer the foundation for building generic applications. Template facilitates reuse, thus shortening the development cycle. Specialized applications are enhanced from generic ones. Templates facilitate interoperability between applications, subject to firewalls. Therefore, it is advantageous to have a baseline stored value application that works in the same way across, for example, MASTER CARD/MONDEX, VISA, and EUROPAY.

In an embodiment of the present invention, industry-specific application templates, or generic applications are created that can be derived or inherited to produce specialized applications and achieve interoperability at the card application level. Card application development is coordinated by the use of templates. Templates facilitate reuse, enable customization, and promote interoperability. In order to facilitate the process, Smart Card Special Interest Groups, or SJGS (one per industry segment) are formed. Each SJG is responsible for individual industry template development. The task is similar to the work done by the travel industry, under the IATA Smart Card Subcommittee and LATA Resolution 791 to specify an Airline ICC.

In an embodiment of the present invention, standards and interoperability are tightly coupled, and standards enable interoperability. Toward that end, the EMV standard is re-invigorated to add stored value to the existing debit and credit functions. This enforces a unified electronic purse definition covering the functionality offered, for example, by VISA, PROTON, and other stored value products. Similarly, the SET standard incorporates smartcard capability to solidity a chip-electronic commerce vision as the industry moves forward.

In an embodiment of the present invention, other standards that facilitate interoperability are, for example, Microsoft's PC/SC and NCI's Open Card Framework (OCF). Finally, financial institutions work closely with the telecommunications and set-top box industries to assure that the next generation GSM and the set-top box systems comprehend the needs of "nomadic" access to the various financial services, including home banking and electronic commerce. This is realized by cell phones and set-top boxes offering a two-card scenario, in that a user controlled smartcard provides secure identity in addition to customized applications, while an independent card issued by the specific industry controls the access to the underlying telecommunications or Internet services.

In an embodiment of the present invention, a smartcard has present and potential future capabilities in the electronic commerce age. However, in the age of Intemet and electronic commerce, security threats continue to dominate the consciousness of the technology marketplace. In order to conduct secure exchange of purchasing orders and payment authorizations, public-key based financial transactions arc of essence. For example, Secure Electronic Transaction (SET) has established itself as the leading standard in the electronic commerce world. Presently, certificates are an intrinsic part of the SET process. They are stored in the PC at the consumer end. Aside from security, lack of portability or mobility is a drawback for the approach. Hence, it is necessary to maintain separate certificates, for example, for use at home and in the office.

In an embodiment of the present invention, portability concern with a smartcard is resolved by putting the certificates on the card. Difficulties created by the present certificate size (around 1 K bytes) and the necessity for a chain of certificates to conduct an authentication process are alleviated as the capacity of the card and the industry standards evolve, such that holding certificates or some cryptograms as being proposed by EMV are as feasible as storing the cardholder's PIN. Alternatively, storing one or more private keys on the card, while leaving certificates on the PC, also provides an interim solution.

In an embodiment of the present invention, verification allows the card to uniquely verify the identity and authenticity of the cardholder. The most common verification mechanism is the use of PIN. However, the PIN mechanism is based on the secrecy of the information. If it is lost, stolen, or if the cardholder forgets, the mechanism becomes insecure or unreliable. Biometrics oriented verification offers high accuracy and confidence in identifying the owner without the burden of PIN memorization. The reference template or templates of the cardholder's biometrics, along with one or more verification algorithms is stored on the card, such that a person's personal identification never leaves the card. As an alternative to on-card template comparison, the exchange is secured between the card and the terminal. In addition, the two devices are mutually authenticated to minimize the threat of exposing the confidential information in an unsecured environment.

In an embodiment of the present invention, the smartcard is equipped with either a high-performance microprocessor or a crypto co-processor to be capable of providing privacy, integrity, confidentiality, and non-repudiation for trusted transactions. This is accomplished through encryption (DES symmetric key or RSA public key based) and authentication (comparing digital signatures). In order to alleviate concerns about time consuming, computation intensive operations, such as the RSA public key operation, techniques such as Chinese Remainder Theorem (CRT) are applied to further accelerate the computation process. Alternatively, Elliptic Curve Cryptography (ECC) also offers comparable security with shorter key length. Ultimately, it is preferable to create private keys from within the card and use the keys to generate digital signatures using, for example, 16-bit and even 32-bit RISC processors rather than older 8-bit smartcard technology.

Information stored on the magnetic stripe or in the PC has been known to be insecure and easily counterfeited or stolen. In an embodiment of the present invention, the smartcard is regarded as the hardware token that offers tamper resistance to physical attacks. In addition, information is further protected against unauthorized access through configurable access control measures such as PIN entry or biometrics comparison for reading or writing files on the card.

In an embodiment of the present invention, the smartcard has encryption capability to secure a message exchange between the card and the terminal (or the host) by encryption or message authentication code generation (MACing) the data. Data is downloaded to the card for information update or configuration setting. Provision is made to allow uploading of data or tokens/tickets to a remote server for short-term storage or long-term backup, for example, for a cardholder who wishes to temporarily store his/her electronic tickets to a remote server before using them. Further, in order to allow the financial institution to restore a stolen or lost card, provision is made for customers to backup the information on the card.

In an embodiment of the present invention, the smartcard has the ability to download new applications after the card is issued. This goes above and beyond the normal loading of data to and from the card and allows the cardholder to customize the card functionality to meet his/her own preference. For card issuers, such as Citibank, this also enables, for example, software upgrade, addition of new applications, and introduction of security algorithms without having to re-issue the card. This is an attractive business proposition from the perspective of total cost of ownership.

In an embodiment of the present invention, a number of categories of card applications are provided which are not mutually exclusive. In migrating from a single-function card environment to a dynamic, multi-function card world, financial institutions and consumers may aggregate applications from one or more of the categories. For example, payment applications, such as debit, credit, and stored value can co-exist with such applications as loyalty program, facility access, and network access.

In an embodiment of the present invention, classification of applications into groups formulates a strategy which establishes a framework for developing applications within individual group or industry. For example, an information manager group is regarded as a generic template or, more precisely, a base class that, for example, can be enhanced to derive specialized applications, such as profile, demographic, and preference applications. Such a framework establishment is exploited to facilitate reuse and enable customization. In establishing a coherent interface across related applications, the accessibility to the grouped services for both on-card or off-card applications, such as an electronic wallet, is also maximized. Such a design principle lays the foundation in organizing applications for additional financial institution smartcard initiatives and drives toward standardization of interfaces for individual category or class of applications.

In an embodiment of the present invention, the stored value application offers a first view of what smartcard can offer as a cash replacement in an off-line environment. The payment applications are elements in a multi-function card environment. An integrated payment card includes all three payment methods, namely, debit, credit, and stored value, for consumers. The payment card serves as a bridge between the physical and the virtual worlds in the electronic commerce age. In addition to such open currency payments, other closed payment vehicles (in a form of barter) include, for example, electronic tickets and transit tokens (as a form of payment to the system), and theme parks tokens (used in a closed entertainment environment, such as GameWorks and Disneyland). Leveraging the stronger identification and verification capabilities, electronic benefits (another form of payment) are paid through the smartcard as well.

In an embodiment of the present invention, conducting secure and trusted transactions over the physical or virtual world requires, for example, a two-tier process of verification and authentication. The cardholder's identity is verified, and there is a mutual authentication between the card and the interacting device or server. In holding a cardholder's identity in the form of a PIN or a biometric template like finger print, the smartcard offers a means for secure access of facilities and networks by conducting or facilitating the verification process. The former requires the template matching algorithm to be resident, for example, on the card such that the verification is done locally.

In an embodiment of the present invention, once the cardholder's identity is successfully verified, the smartcard then performs mutual authentication with a terminal or a remote server to ensure a trusted transaction. Given such capabilities, the card behaves as the access keys in both the physical world for facility access and the virtual world for network access and E-commerce transactions. A generic cryptographic framework is established as the foundation for developing cryptographic applications. Such a framework allows use of such services for both on-card and off-card applications to maximize reuse and shorten the time-to-market.

In an embodiment of the present invention, the smartcard enhances a trusted relationship between, for example, a bank and its customers, based on the secure storage of both value and information of the cardholder. Several types of information pertaining to a cardholder can be stored on the card. For example, personal identification, such as name, blood type, date and place of birth, mother's maiden name, address, and phone number can be stored. Profile and demographic information, such as marriage status, number of children and their ages, income level, and hobbies can also be stored. Further, preference information, such as language, frequent calling numbers, airplane seat assignment, and computer configuration can be stored on the card. Additionally, privilege and entitlement information, such as administrative status for computer and network access can be stored on the card.

In an embodiment of the present invention, the smartcard plays the role of an information manager on behalf of the cardholder that safeguards and manages the cardholder's personal information This is important as consumer privacy is a leading concern in the smartcard and electronic commerce industries. Different kinds of information require different levels of security measures to authorize an access. Much of the trusted relationship between a financial institution, such as a bank, and its customers hinges on how well the financial institution manages its customers' personal information. A flexible yet secure information access mechanism is provided, such that applications like filling forms at a doctor's office can be automated without the concern of invasion of privacy.

In an embodiment of the present invention, the smartcard provides a marketing tool for both merchants and financial institutions by storing loyalty points or coupons for individual retailers. On-card loyalty applications provide cardholders flexible shopping benefits, including instant loyalty points reward and redemption, for both physical and Intemet transactions. In addition, churches and schools can, for example, issue scrips to benefit their causes from the sales.

In an embodiment of the present invention, by allowing download of new applications after the card is issued, the smartcard offers a unique delivery channel in distributing customized services. The cardholder can determine the applications on the card and make adjustments as his/her lifestyle evolves. For example, the cardholder can delete rarely used applications and add new ones. The personalization capability is further amplified in conjunction with a multiplicity of delivery channels, such as cell phones, set top boxes, and network computers. Consumers are afforded added convenience and flexibility in conducting financial transactions and invoking services delivered through the smartcard.

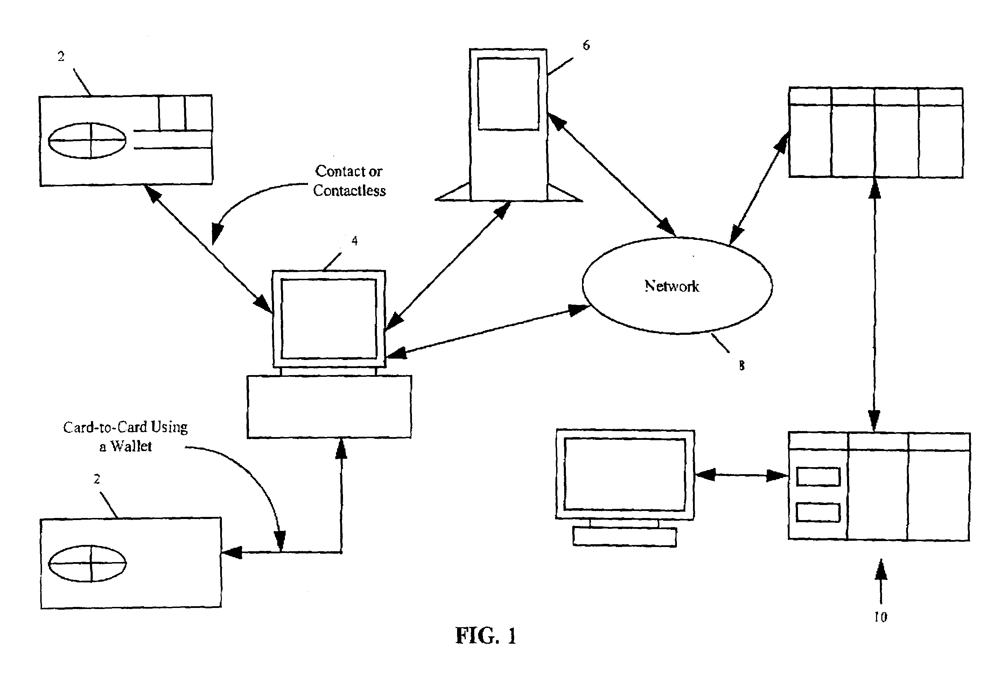

Referring now in detail to an embodiment of the present invention, which is illustrated in the accompanying drawings, Fig. 1 shows an overview of the key components from a system-wide perspective of the architecture for an embodiment of the present invention. Referring to Fig. 1, the end-to-end architecture takes into account the issues and concerns from the card 2 to the terminal 4, to the front-end system 6, to the network 8, and, ultimately, to the back-end server 10. Such an end-to-end perspective is an important aspect of the system and enables reflecting and addressing system-wide concerns, such as security, performance, interoperability, and standardization. In this multi-function world, it is imperative to have such an understanding in order to gauge the needed performance and security for the card. This also enables addressing the interoperability and standardization concerns between the card 2 and the terminal 4, as well as between the terminal 4 and the back-end server 10. For example, the system architecture is designed such that security broken on one end can be remedied or minimized from the other.

Referring further to Fig. 1, five major components of the end-to-end architecture include, for example, the smartcard 2, the terminal 4, the front-end 6, the network 8, and the back-end servers 10. The card issuer has full control of the security measures both on the card 2 and at the back-end servers 10. The in-between terminals 4 and 6 and the networks 8 are regarded as insecure and are treated with special attention. On the other hand, intelligence or processing capability is distributed across the system. Depending on the application needs, intelligence is propagated from the card 2 to the terminal 4, and to the servers 10, or vice versa.

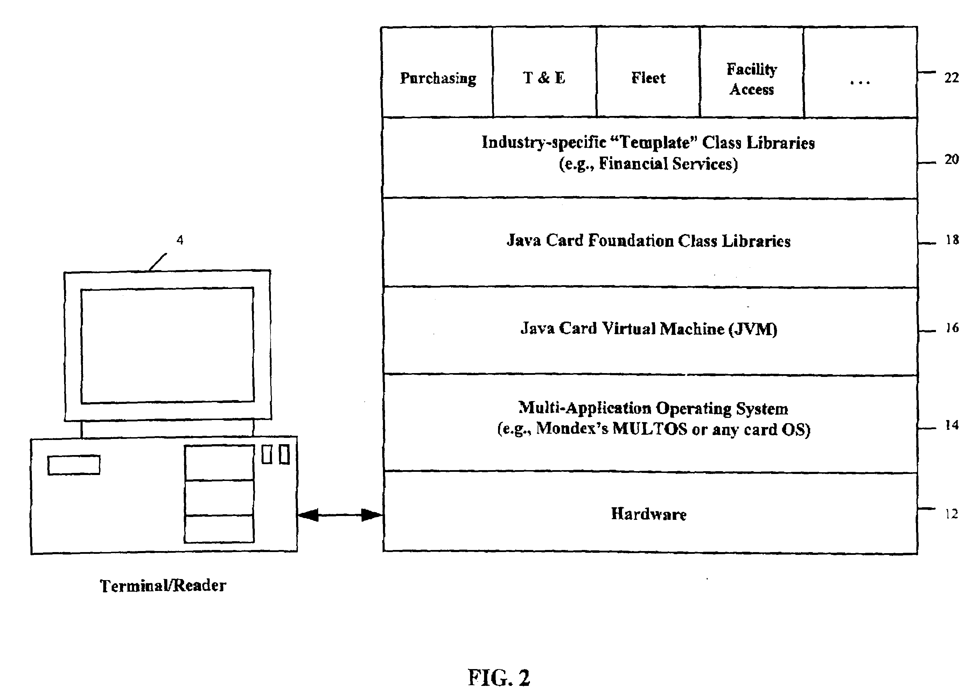

In an embodiment of the present invention, the smartcard 2, acting as the ultimate thin client, is the relationship card that is leveraged to further the trusted relationship between a financial institution, such as a bank, and its customers. In order to accomplish that, the card infrastructure supports the required multi-functionality and downloadability. An example of such a platform is Java card, which encompasses the virtual machine and the supporting class libraries. Fig. 2 is a chart which shows a sample of layered hierarchy in the card platform for an embodiment of the present invention. A card platform, such as the Java card platform, offers a layered hierarchy in its architecture. For example, a Java card virtual machine (JVM) 16 sits atop the card operating system 14 that is either proprietary or open, as in the case of Mondex's MULTOS.

In an embodiment of the present invention, the term applet means a smartcard application that is compact in size and downloadable over a public network. Referring to Fig. 2, a card architecture such as JVM 16 offers added security during runtime by providing bytecode verification to prevent unauthorized applets from being executed on the card. Bytecode is machine independent and is interpreted by the JVM 16. Sitting above the JVM layer 16 are the foundation class libraries 18, which offer the interface for building Java card applications. Such a framework based approach facilitates reuse and enables faster time-to-market for the application development. In order to further extend that vision, industry-specific and application-specific templates 20 are created, which are foundation class libraries that can be derived or inherited to produce specialized applications. Hence, interoperability is achieved at the card application level. Finally, at the top of the hierarchy is a suite of cross-industry applications 22 that co-exist harmoniously on the card 2.

In an embodiment of the present invention, a spectrum of terminals and access devices 4 have smartcard interfaces. These include ATMs, POS terminals, PCs with smartcard readers (either standalone or part of keyboards), personal digital assistants (PDAs), set-top boxes, cell phones, cable/satellite TV boxes, and various contact/contactless reader devices. The design provides a coherent architecture between the card 2 and the terminal 4, such that both card and terminal applications can be upgraded simultaneously to allow seamless migration. An electronic wallet residing, for example, on a PC or distributed over a network offers a vehicle for delivering payment services and information management over the Internet. The smartcard 2 is a natural extension of the wallet to physically contain some of the wallet functionalities. The smartcard 2 evolves as the physical embodiment of the wallet. Thus, a certain portion of the wallet functionalities are moved to the card 2, while others either stay on the terminal 4 or browser or move to the server. Distribution of intelligence across the network is realized in such a migratory fashion.

In an embodiment of the present invention, from an architectural perspective, the data of a wallet physically resides, for example, on the card 2 or in a remote server. The storage location is arranged based on the nature of the information and the constraint of capacity on the card 2. Regardless of the physical location, the information is accessible to the user transparently. In situations where the user wishes to have a conscious understanding of the actual data location so as to make a proper decision during transactions, the smartcard architecture facilitates such a decision-making process. Storing or backing up critical information on the server is a powerful mechanism to safeguard a cardholder's valuable information.

In an embodiment of the present invention, in the event that the card 2 is lost or stolen, a financial institution can confidently issue a new card with the original card information (not stored value) restored from the financial institution's servers. With this recoverability, the customers of the financial institution have a peace of mind, knowing that a trusted financial institution is securing the information on their behalf. This, in turn, provides market differentiation for a financial institution, such as bank, as losing a card has become one of the top consumer concerns. In order to enable biometrics-based verification, a biometric scanning device, such as a fingerprint or hand geometry scanner, is installed at the terminal 4. The captured biometric data is compared with a reference template on the card 4 to verify the authenticity of the cardholder.

In an embodiment of the present invention, the front-end systems 6 serve as the front end to terminals 4. Their principal responsibility is to offer the necessary translation of message protocols between the terminal 4 and back-end servers 10. They often play the role of a middleware or gateway in a networking environment, such that smartcard-ready terminals 4 are transparent to back-end legacy systems 10. Networks 8 offer the plumbing in a distributed environment. Both public (open) and private (proprietary) networks are used in the system. The former include, for example, Intemet, PLUS, Cirrus, and Star., whereas the latter includes, for example, Citishare.

In an embodiment of the present invention, in the financial services environment, back-end servers 10 deal with clearing and settlement functions. Several back-end services support operations in a dynamic, multi-function environment, such as Certificate Authority (CA), Electronic Customization Depot (ECD), Electronic Deposit Box (EDB), and Electronic Vault (EV). A financial institution can provide one or more of such services in order to provide market differentiation and to further the relationships with its customers. The particular services are devised logically according to their functions. More than one service can reside physically on the same server 10, depending on business needs and design decisions.

In an embodiment of the present invention, Certificate Authority (CA) is a trusted third party. It is responsible for issuing certificates to customers, merchants, and those who want to conduct public-key based transactions over the intemet. Secure Electronic Transaction (SET) operations are certificate based. Thus, the CA inherently becomes an integral part of any secure transaction process. A financial institution can be a CA in order to maximize interactions with its customers.

In an embodiment of the present invention, an electronic customization depot behaves as an applet server and a monitor application server to offer a customer the options to customize the customer's card 2 by adding or deleting applets. As an applet server, it is the source for applet download and for card restoration. Each monitor application is responsible for establishing secure download of applets to the customer's smartcard 2. Load keys, for example, are stored in the monitor application to facilitate the operation. Counterparts of a safety deposit box and vault in the physical world are provided in a virtual world electronic deposit box and electronic vault. Like a safety deposit box, whose purpose is to store customer's valuables in a trusted and secure environment, the electronic deposit box offers similar services to a financial institution's customers.

In an embodiment of the present invention, the financial institution stores or backs up valuable information on the smartcard 2 for a customer upon request. Collectively, electronic deposit boxes are aggregated within an electronic vault. In addition to holding customers' valuable information, including electronic tokens and tickets, an individual electronic deposit box also maintains a software inventory of each customer's card 2. With such an inventory, the financial institution is able to restore the card applications, for example, from the electronic customization depot, for a customer when the card is lost or stolen.

In an embodiment of the present invention, facilities are provided to support applications, such as secure dynamic application downloads, which are the policies and mechanisms needed to securely install card applications on the smartcard 2 after the card has been issued. Other such facilities include on-card application interactions, which are mechanisms for allowing card applications to discover and safely interact with each other. Additional such facilities include off-card application interactions, such as mechanisms for supporting secure interactions between on-card and off-card applications and advanced system management. On-card applications are frequently referred to as applets. Of necessity, applications installed on the smartcard 2 tend to be very small when compared with desktop, terminal, or mainframe applications and hence are called applets.

In an embodiment of the present invention, the smartcard application platform meets two overall security goals, namely, to ensure the security and integrity of the card's system components and to provide applets with scaleable mechanisms to ensure their own security and integrity. The overall security policy for the card 2 is that only authorized entities may have access to card resources; and this access is limited to the activities for which access has been granted. In order to insure that security goals of the financial institution are met, the card application platform includes several important elements, two of which are a master application and the monitor application. As a special system applet, the master application represents the card issuer. It provides global card services, including, for example, installing applets on the card 2, personalizing and reading global data, managing the card life cycle state, supporting external audits when the card is blocked, and maintaining a map of the monitor applications associated with each applet.

In an embodiment of the present invention, the system includes applets developed by other applet providers, as well as a financial institution's own applets. Thus, the card application platform supports the secure and confidential installation of applets from multiple providers. In order to support secure installation of applets, the financial institution uses monitor applications. A monitor application is a special applet supplied by an applet provider. Each monitor application controls the installation of a provider's applet or applets. There can be multiple monitor applications on a card Each monitor application represents a unique cryptographic relationship for a single applet provider. Using its unique combination of cryptographic mechanisms and keys, each monitor application manages the signature checking and decryption of applets loaded onto the card 2. Therefore, the installation and initialization of a monitor application on the card 2 is an essential step to support the secure download of a provider's applets.

Another important aspect of an embodiment of the present invention is the installation of the master application on the card 2, which functions in conjunction with the monitor application. The master application serves, for example, as an arbiter, a gatekeeper, and a message dispatcher on the smartcard 2. Direct application-to-application interactions on the card are not permitted. Instead, all interactions must go through the master application, serving as the arbiter, gatekeeper and message dispatcher on the card 2. The master application serves as an arbiter during inter-application communications. Any request initiated by one application is sent to the master application before it is routed to its destination application, for example, for preliminary checking to prevent bogus requests. Such a request can be, for example, a file access or a service rendition. In either case, it is up to the destination or receiving application to decide whether to honor the request.

The master application serves as a gatekeeper, for example, during dynamic application downloading to prevent unauthorized applications from being downloaded onto the card 2. In such capacity, the master application, working in conjunction with the individual monitor applications, performs necessary authentication and validation functions to ensure that the downloaded application originates from a legitimate source and that the content has not been altered.

The master application serves as a message dispatcher, for example, during terminal-to-card interactions. The message dispatching process is a simple, yet robust, message routing mechanism that ensures timely delivery of messages, while incurring little overhead. Each incoming message is routed sequentially to each application resident on the card 2, and each such application determines whether it is the intended recipient of the message. If so, the particular application processes the message and returns a "success" response. Otherwise, the application returns an "error" message, and the master application continues to forward the message to other applications on the card 2, until a "success" response is returned. Thereafter, subsequent messages are forwarded to the last successful application, until the particular application returns an "error" message, and the cycle is repeated.

Another important aspect of an embodiment of the present invention is installation of a consolidated identification application (ID application) on the card 2. The ID application serves as a single placeholder for all personal profile related information to avoid duplication of data. When an application requires identification related information, the application submits its own identification and a clearance level, and the ID application determines the privilege, if any, to be given to the requesting application for data access. For example, a health care application can access the cardholder's blood type information, while a loyalty program cannot.

In an embodiment of the present invention, the installation and initialization of monitor applications can occur during card initialization. However, for maximum flexibility, the financial institution supports downloading and installing new monitor applications after the card 2 has been issued. To support this feature, a root monitor application is installed during card initialization and personalization. Subsequently, each downloaded monitor application allows the financial institution to download and install specific applets. Before the actual download and installation of an applet takes place, the appropriate monitor application authorizes the download of the applet. Therefore, before an applet is downloaded, an application identifier (AID) that identifies the applet must be registered with the appropriate monitor application, so that it can authorize the downloading of the identified applet.

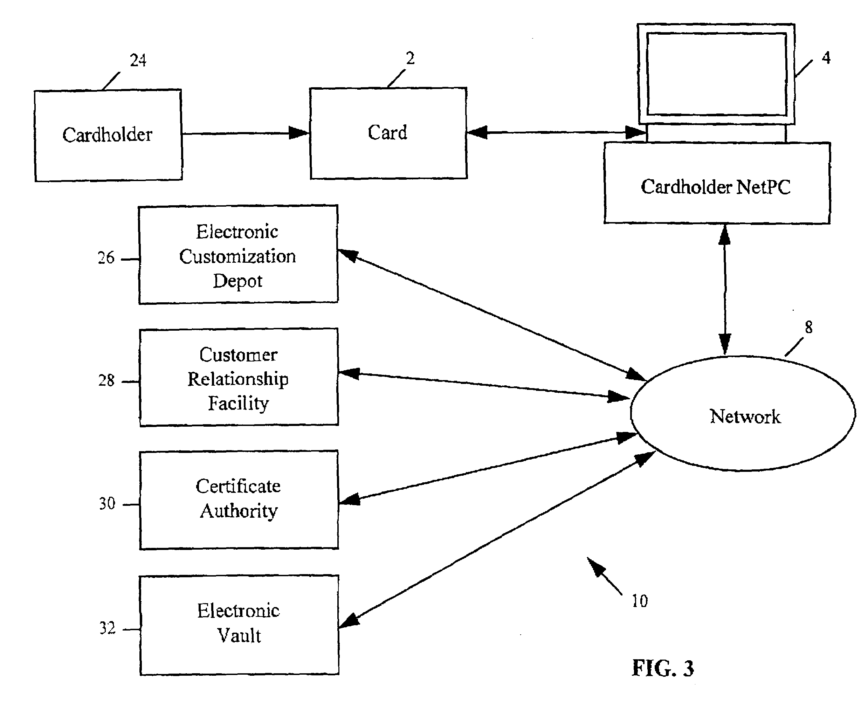

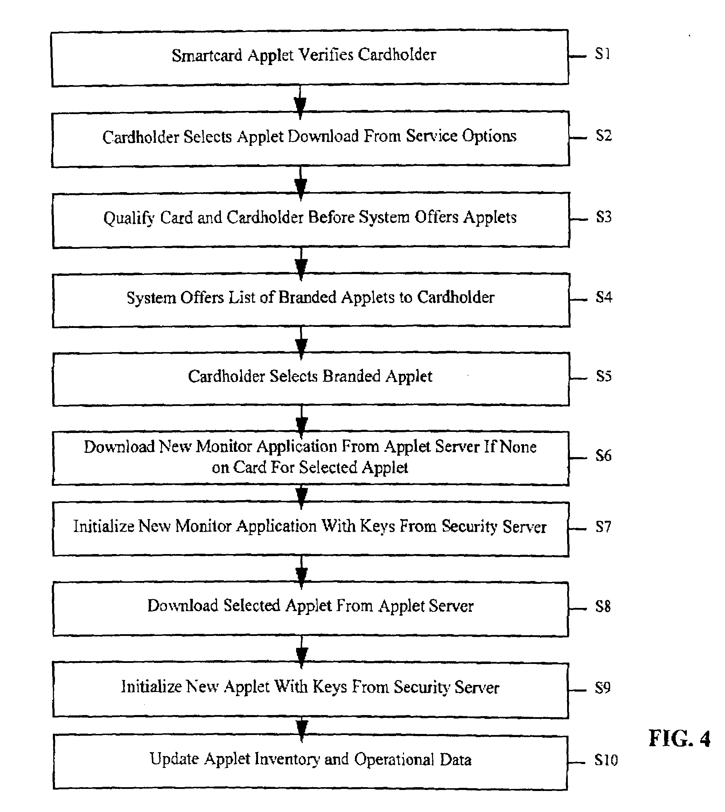

Fig. 3 is a schematic diagram which amplifies the flow of information shown in Fig. 1 and provides further detail regarding the process of selecting and securely downloading an applet onto smartcard 2 for an embodiment of the present invention. Fig. 4 is a flow chart which provides further detail regarding the process of selecting and securely downloading an applet onto the smartcard 2 for an embodiment of the present invention. At S1, the smartcard 2 contains an applet that verifies the identity of the cardholder 24 with a PIN or a biometric, such as a fingerprint. At S2, from a selection of service options offered by the system, the cardholder 24 selects the option to download a new applet. The card 2 and the cardholder 24 must both be qualified before the system offers any applets for download At S3, the system offers those applets supported by the business based on one or more relationships with the cardholder 24 and those applets that will fit in the space available on the card 2.

In an embodiment of the present invention, it is noted that space qualifications imposed on applets must account for the total space needed for each applet, including any other applets on which each applet depends. Thus, applets may be grouped into clusters. So, if one applet depends on another applet that has not yet been installed on the card 2, the card has enough space to accommodate all applets that form such a dependency cluster. At 54, the system presents a list of qualified applets to the cardholder 24, including, for example, brands that help identify the providers of the applets. There are several kinds of disclosures to allow the cardholder 24 to make informed decisions during applet selection. Some representative examples include the total size of each applet, the space available on the card 2, and any other limitations inherent in the card infrastructure. For example, once an applet has been installed, it cannot be removed, nor can the allocated space be recovered.

In an embodiment of the present invention, at S5, the cardholder 24 selects an applet from the offered applet list. At S6, if a monitor application for the selected applet does not exist on the card 2, a new one is downloaded from the applet server in the electronic customization depot. At S7, if a new monitor application was added to the card, the new monitor application is initialized with any necessary key or keys, which are obtained from the security server in the electronic customization depot. At S8, the selected applet is downloaded from the applet server in the electronic customization depot 26 and installed, using the security mechanism provided by the monitor application and, for example, the gatekeeper functionality of the monitor application. At S9, the security server in the electronic customization depot 26 supplies the new applet with any key or keys necessary for its operation.

In an embodiment of the present invention, if the applet requires any customer information, it is obtained from the customer relationship facility 28. If the applet requires a digital certificate, it is obtained from the appropriate certificate authority 30. At S10, if the cardholder relationship supports it, the new applet is registered in the card software inventory. A copy of the card software inventory is maintained in the cardholder's electronic deposit box in the bank's electronic vault 32. In addition, the cardholder's electronic deposit box is updated with a copy of the applet's operational data, if any, but not any keys or certificates, which are reissued in the event of a lost card.

In an embodiment of the present invention, in order to create a secure and trusted environment, applets are isolated from each other. An applet firewall prevents one applet from accessing the contents and behavior of objects owned by other applets. However, some applets are allowed to communicate with each other in trusted ways. A smartcard, such as the Java card, provides two basic mechanisms for explicitly sharing objects between applets. One such mechanism is restricted sharing, and the other is unrestricted sharing. Restricted sharing allows an applet to grant specific other applets access to a shared object. Unrestricted sharing allows an applet to grant all other applets access to a shared object. In combination, these two basic mechanisms are used to implement selective object sharing. Some applets share selected information and services. For example, a payment applet interacts with a loyalty applet to add loyalty points as part of a payment transaction. However, the loyalty applet provider can restrict these interactions to applets from certain providers or certain kinds of payment applets. To support this kind of selective interoperability, some of the applets have a mechanism for shared object registration.

In an embodiment of the present invention, applets can be downloaded and installed on the card 2 after the card has been issued. Therefore, an applet that already exists on the card 2 does not have any knowledge of a newly installed applet until the new applet registers itself with the pre-existing applet. Once the new applet identifies itself to the pre-existing applet, the pre-existing applet can grant the new applet access to its shared object or objects. Thus, the pre-existing applet or sharing applet supports registration of other applets for its shared object or objects.

In an embodiment of the present invention, in order to implement shared object registration, the sharing applet grants unrestricted access to a resource guardian. The resource guardian controls and grants restricted access to some guarded resource or resources, referred to as the sharing applet's shared object or objects. Some of the applets can also contain reusable foundation class libraries or groups of Java classes that are generic enough to be used by several kinds of applets. In order to retain control over the usage of some objects and thereby maintain trust, some of these libraries include shared object factories. A shared object factory creates a new instance of a library class on request for a specific client applet, and registers the new instance for access by the client applet.

In an embodiment of the present invention, some applets share information and services. However, giving the cardholder 24 the ability to select and dynamically download applets implies that the applets cannot be installed on the card 2 in a predetermined order. For example, a loyalty applet can be designed to support interactions with several kinds of payment mechanisms. When a new payment mechanism is installed on the card 2, it will likely want to discover whether any compatible loyalty applets are already on the card. Therefore, in order to allow dynamically loaded applets to discover during installation what other applets exist on the card 2, the card application platform includes an application registry.

In an embodiment of the present invention, the applications registry provides a shared object registration mechanism that supports linkage between applications based on their identification and based on their functionality or object-oriented classification. Thus, newly installed applets are able to discover whether another applet exists on the card 2 using an AID, and are also be able to discover whether any other applet exists on the card that implements a specific functional interface or that was derived from a specific base class.

In an embodiment of the present invention, allowing applets to discover and link with each other based on their functionality gives them a much more flexible alternative to identification alone. It allows them to achieve a level of multi-functional integration beyond the simple deployment of multiple functions on the smartcard 2. It also allows terminals to dynamically and intelligently adapt their interactions with the card 2 based on the functionality supported by the applications that actually exist on the card. In addition to facilities that support on-card interactions, card applications also have services to facilitate interactions with off-card applications, whether they reside on the card terminal 4 or on back-end systems 10.

In an embodiment of the present invention, security mechanisms related to dynamic application download are asymmetric in that they are applied in only one direction. A downloaded applet is decrypted and its integrity and authenticity are verified before it is installed on the card 2. However, the applets themselves have symmetric mechanisms for security. They have support, for example, for data encryption and decryption, digital signature generation and verification, and message authentication code (MAC) generation and verification. The card application platform includes a facility, such as cryptographic foundation classes, that supports packaging these diverse security mechanisms together for coherent, consistent and symmetric use, including services for key generation and key management.

In an embodiment of the present invention, as the cardholder 24 puts more and more kinds of information on the card 2, the value of the card to the cardholder naturally increases. Thus, the loss of the card 2 may represent a substantial loss for the cardholder 24. To reduce the significance of this loss, the system provides a mechanism for recovering the information contained on the card 2 in order to re-issue the card in the event of its loss. The financial institution provides a secure off-card information storage facility or electronic vault 32 that contains an electronic deposit box for each cardholder 24. Each electronic deposit box contains a copy of the contents of each card that the cardholder 24 registers with the bank, including a software inventory of the applets installed on the card 2, as well as a copy of the information managed by each of the installed applets.

In an embodiment of the present invention, applets of providers other than the financial institution can be installed on the card 2. The providers of such other applets have a legitimate interest in protecting their security keys and the data managed by their applets. In order to support applet data recovery, the applets on the card 2 and the electronic vault 32 cooperate by using a secure protocol for data exchange. In order to support applet provider secrecy, each applet uses encryption to prevent the copied data in the vault 32 from being examined. These electronic security mechanisms together mimic the physical security mechanisms used to store valuables in a safe deposit box. For example, it requires two keys to access the valuables stored in the deposit box, one of which belongs to the customer and one of which belongs to the bank. Thus, using symmetric mechanisms, each applet is able to produce a blinded copy of its information during backup, and consume a blinded copy during restoration. The electronic vault 32 stores the blinded copy of the information for each applet.

In an embodiment of the present invention, the smartcard 2 is not limited to playing the role of a service provider in a client-server architecture, in which interactions between the card 2 and the terminal 4 are initiated by the terminal, with the card as a responsive device, but the system provides a more flexible architectural solution that includes the smartcard. On-card objects are allowed, for example, to initiate interactions with remote, off-card objects in the context of a distributed computing environment, which is supported by a card platform, such as Java card, with inclusion of, for example, the Java facility for remote method invocation (RMI).

In an embodiment of the present invention, in the context of distributed objects, mechanisms are provided by the system to support transparent object distribution. Thus, on-card objects are able to interact with off-card objects and vice-versa without explicit knowledge of their location. Such transparency simplifies the system design, allowing greater flexibility in locating objects, and Supports the deployment of migratory objects that can move from one place, such as the electronic vault 32, to another, such as the card 2. For example, an electronic ticket can be bought and stored in the electronic vault 32 until, when it is needed for use, it can be moved onto the smartcard 2 to allow off-line redemption.

In an embodiment of the present invention, replacement of deployed applets is supported by a card platform, such as Java card. Application identifiers (AIDs) are assigned and administered. An applet AID can be reused without change when deploying a new applet version. Alternatively, but less desirable, is a naming scheme for AIDs that includes a version identifier to guarantee uniqueness. A mechanism replaces the objects that have been created for an applet, for example, when some of the applet classes have changed their shapes. On-card mutation may be difficult or not possible given the card constraints. This consideration reinforces the value of the electronic vault 32 as a backup facility.

In an embodiment of the present invention, the old version of an applet may be removed entirely, including all its objects, and replaced with the new version, and the applet objects restored from backup copies that have been mutated in the electronic vault 32. A cleanroom software engineering approach for applet development applies rigorous process controls to the software development process, producing very high quality software, such as six sigma quality. The resource constraints of smartcards require that applets must be kept relatively small and simple. Thus, the rigorous process requirements of the cleanroom approach are not as burdensome as it is on large software projects.

Various preferred embodiments of the invention have been described in fulfillment of the various objects of the invention It should be recognized that these embodiments are merely illustrative of the principles of the present invention. Numerous modifications and adaptations thereof will be readily apparent to those skilled in the art without departing from the spirit and scope of the present invention. Accordingly, the invention is only limited by the following claims.

## Claims

1. A method of managing addition of at least one new application to a multi-function smartcard for a cardholder, comprising:
installing a monitor application for the new application on a microcomputer of the smartcard;
authorizing download of the new application by the monitor application and by a master application resident on the smartcard; and
downloading the new application to the smartcard microcomputer.

2. The method of claim 1, wherein installing the monitor application further comprises downloading the monitor application from a server.

3. The method of claim 2, wherein the server further comprises an electronic customization depot.

4. The method of claim 3, wherein the electronic customization depot further comprises functionalities of at least one of an applet server and a monitor application server.

5. The method of claim 1, wherein installing the monitor application further comprises downloading the monitor application at a terminal.

6. The method of claim 5, wherein the terminal further comprises a smartcard access device selected from a group consisting of an automated teller machine, a merchant terminal, a personal computer, a personal digital assistant, a TV set-top box, land phone, a cell phone, a digital phone, a cable TV box, a satellite TV box, a contact reader, a contactless reader, and a combination contact and contactless reader.

7. The method of claim 6, wherein downloading the new application further comprises downloading an application consisting of at least a portion of a plurality of functionalities for an electronic wallet from a server connected to the terminal, while allowing other portions of the functionalities for the electronic wallet to remain on at least one of the terminal and the server in a migratory fashion.

8. The method of claim 1, wherein installing the monitor application further comprises downloading the monitor application over a network.

9. The method of claim 8, wherein the network further comprises at least one of a public network and a proprietary network.

10. The method of claim 1, wherein authorizing the download further comprises initializing the monitor application.

11. The method of claim 10, wherein initializing the monitor application further comprises initializing the monitor application with a key provided by a server.

12. The method of claim 1, wherein authorizing the download further comprises registering an application identifier for the new application with the monitor application.

13. The method of claim 1, wherein downloading the new application further comprises verifying identification of the cardholder.

14. The method of claim 13, wherein verifying the identification further comprises verifying the identification by an applications on the smartcard microcomputer.

15. The method of claim 14, wherein verifying the identification further comprises verifying the identification with a PIN of the cardholder.

16. The method of claim 14, wherein verifying the identification further comprises verifying the identification with biometric data of the cardholder.

17. The method of claim 16, wherein verifying with the identification further comprises verifying the biometric data with a scanner at a terminal.

18. The method of claim 17, wherein verifying the biometric data further comprises comparing the biometric data with a reference template on the smartcard microcomputer.

19. The method of claim 18, wherein the biometric data further comprises fingerprint data for the cardholder.

20. The method of claim 1, wherein downloading the new application further comprises authenticating the smartcard.

21. The method of claim 20, wherein authenticating the smartcard further comprises authenticating the smartcard by a server.

22. The method of claim 1, wherein downloading the new application further comprises offering a selection of service options to the cardholder.

23. The method of claim 22, wherein downloading the new applicalion further comprises selecting a service option to download a new application by the cardholder.

24. The method of claim 1, wherein downloading the new application further comprises offering a list of qualified new applications to the cardholder.

25. The method of claim 24, wherein the list of qualified new applications further comprises a plurality of new applications according to pre-defined parameters.

26. The method of claim 25, wherein the pre-defined parameters comprise at least one of a new application supported by business based on a relationship with the cardholder and a new application that fits in space available on the smartcard microcomputer.

27. The method of claim 26, wherein the pre-defined parameters further comprises the new application which, together with any other applications on which the applicalion depends, fits as a dependency cluster in space available on the smartcard microcomputer.

28. The method of claim 24, wherein downloading the new application further comprises selecting the new application from the list of applications by the cardholder.

29. The method of claim 1, wherein downloading the new application further comprises downloading the new application from a server.

30. The method of claim 29, wherein the server further comprises an electronic customization depot.

31. The method of claim 30, wherein the electronic customization depot further comprises functionalities of at least one of an applet server and a monitor application server.

32. The method of claim 1, wherein downloading the new application further comprises downloading the new application at a terminal.

33. The method of claim 32, wherein the terminal further comprises a smartcard access device selected from a group consisting of an automated teller machine, a merchant terminal, a personal computer, a personal digital assistant, a TV set-top box, a land phone, a cell phone, a digital phone, a cable TV box, a satellite TV box, a contact reader, a contactless reader, and a combination contact and contactless reader.

34. The method of claim 1, wherein downloading the new application further comprises downloading the new application over a network.

35. The method of claim 34, wherein the network further comprises at least one of a public network and a proprietary network.

36. The method of claim 1, wherein downloading the new application further comprises installing the new application on the smartcard microcomputer.

37. The method of claim 36, wherein installing the new application further comprises installing the new applicalion using a security mechanism of the monitor application.

38. The method of claim 36, wherein installing the new application further comprises supplying the new application with an operation key.

39. The method of claim 36, wherein installing the new application further comprises supplying the new application with cardholder information.

40. The method of claim 36, wherein installing the new application further comprises supplying the new application with digital certificate.

41. The method of claim 36, wherein installing the new application further comprises registering the new application in a software registry of the smartcard.

42. The method of claim 41, wherein registering the new application further comprises registering the new application according to an object-oriented classification of the software registry.

43. The method of claim 41, wherein registering the new application further comprises furnishing a copy of the smartcard software registry to an electronic deposit box.

44. The method of claim 43, wherein furnishing a copy further comprises updating the electronic deposit box with a copy of operational data for the new application.

45. The method of claim 36, wherein installing the new application further comprises selectively sharing at least one object of the new application with at least one object of another application on the smartcard.

46. The method of claim 45, wherein selectively sharing further comprises at least one of restricted sharing of the object by the new application and unrestricted sharing by the new application.

47. A system for securely adding at least one new application to a multi-function smartcard for a cardholder, comprising:
means for installing a monitor application for the new application on a microcomputer of the smartcard;
means for associated with the installing means for authorizing download of the new application by the monitor application and by a master application resident on the smartcard; and
means associated with the authorizing means for downloading the new application to the smartcard microcomputer.

48. The system of claim 47, wherein the installing means further comprises means for downloading the monitor application from a server.

49. The system of claim 48, wherein the server further comprises an electronic customization depot.

50. The system of claim 49, wherein the electronic customization depot further comprises functionalities of at least one of an applet server and a monitor application server.

51. The system of claim 48, the means for downloading the monitor application further comprises a terminal communicating with the server over a network.

52. The system of claim 47, wherein the means for downloading the new application further comprises a server.

53. The system of claim 52, wherein the server further comprises a an electronic customization depot.

54. The system of claim 53, wherein the electronic customization depot further comprises functionalities of at least one of an applet server and a monitor application server.

55. The system of claim 52, wherein the means for downloading the new application further comprises a terminal communicating with the server over a network
